# EUROPEAN PATENT APPLICATION

(11) **EP 4 691 914 A1**
(43) Date of publication of application: **11.02.2026**
(21) Application number: 24784818.7
(22) Date of filing: 28.03.2024
(51) Int. Cl.: B64D 37/30, B64D 27/10, F02C 7/22, F02C 9/28, F02C 9/40, F02C 9/46

(54) **HYDROGEN FUEL SUPPLY SYSTEM AND AIRCRAFT**

(30) Priority: 07.04.2023 JP 2023063025
(71) Applicant: KAWASAKI JUKOGYO KABUSHIKI KAISHA, Kobe-shi, Hyogo 650-8670 (JP)
(72) Inventor: KUSUMOTO, Yoshiaki, Kobe-shi, Hyogo 650-8670 (JP)
(74) Representative: Dantz, Jan Henning
(86) International application number: PCT/JP2024/012581
(87) International publication number: WO 2024/210029

(57) **Abstract**

A hydrogen fuel supply system includes: a fuel tank storing hydrogen fuel; a fuel supply passage connecting the fuel tank to an engine of an aircraft; a pressure pump that is located in the fuel supply passage and pressurizes the hydrogen fuel toward the engine; a main control valve located between the pressure pump and the engine in the fuel supply passage; a discharge passage connected to a portion of the fuel supply passage which is located between the pressure pump and the main control valve; a sub-control valve located in the discharge passage; an outlet pressure sensor that detects outlet pressure of the pressure pump; and processing circuitry configured to control the pressure pump, the main control valve, and the sub-control valve. The processing circuitry is configured to, when the outlet pressure detected by the outlet pressure sensor exceeds a predetermined threshold, control the sub-control valve so as to increase an opening degree of the sub-control valve.

## Description

### Technical Field

The present disclosure relates to a hydrogen fuel supply system for an aircraft including an engine, and to the aircraft.

### Background Art

PTL 1 discloses a fuel supply system of a jet engine used for a conventional aircraft or the like. In this system, fuel discharged from a pump is supplied to equipment at a set flow rate by a flow rate control unit, and excess fuel is returned to an inlet of the pump. PTL 2 discloses a hydrogen fuel supply system for an aircraft. In this system, hydrogen fuel is supplied from a fuel tank to an engine.

### Citation List

### Patent Literature

PTL 1: Japanese Laid-Open Patent Application Publication No. 2004-197573
PTL 2: U.S. Patent Application Publication No. 2022/0145801

### Summary of Invention

### Technical Problem

The boiling point of hydrogen is extremely lower than that of conventionally known jet fuel. When returning the excess liquid hydrogen to the inlet of the pump, the temperature of the liquid hydrogen increases in a pipe, and the hydrogen cannot maintain its liquid phase. Therefore, there is a possibility that the conventional fuel system of PTL 1 cannot be directly applied to the hydrogen fuel supply system of PTL 2.

An object of one aspect of the present disclosure is to enable a hydrogen fuel supply system for an aircraft to operate stably.

### Solution to Problem

A hydrogen fuel supply system according to one aspect of the present disclosure is a hydrogen fuel supply system for an aircraft including an engine, the hydrogen fuel supply system including: a fuel tank storing hydrogen fuel in a liquid phase; a fuel supply passage connecting the fuel tank to the engine; a pressure pump that is located in the fuel supply passage and pressurizes the hydrogen fuel toward the engine; a main control valve located between the pressure pump and the engine in the fuel supply passage; a discharge passage connected to a portion of the fuel supply passage which is located between the pressure pump and the main control valve; a sub-control valve located in the discharge passage; an outlet pressure sensor that detects outlet pressure of the pressure pump; and processing circuitry configured to control the pressure pump, the main control valve, and the sub-control valve. The processing circuitry is configured to, when the outlet pressure detected by the outlet pressure sensor exceeds a predetermined threshold, control the sub-control valve so as to increase an opening degree of the sub-control valve.

An aircraft according to one aspect of the present disclosure includes: an engine; a fuel tank storing hydrogen fuel in a liquid phase; a fuel supply passage connecting the fuel tank to the engine; a pressure pump that is located in the fuel supply passage and pressurizes the hydrogen fuel toward the engine; at least one discharge passage connected to the fuel supply passage; an excess detector that detects the occurrence of excess hydrogen fuel in the fuel supply passage; a valve that adjusts flow in the discharge passage; and processing circuitry configured to control the valve. The processing circuitry includes: an emergency discharge mode which is selected in an emergency and in which the processing circuitry controls the valve to discharge the hydrogen fuel from the fuel supply passage to the discharge passage; and a normal discharge mode which is selected during a normal operation and in which when the occurrence of the excess hydrogen fuel in the fuel supply passage is detected, the processing circuitry controls the valve to discharge the excess hydrogen fuel in the fuel supply passage to the discharge passage.

### Advantageous Effects of Invention

According to one aspect of the present disclosure, the hydrogen fuel supply system for the aircraft can operate stably.

### Brief Description of Drawings

FIG. 1 is a plan view of a hydrogen aircraft according to an embodiment.
FIG. 2 is a block diagram of a hydrogen fuel supply system of FIG. 1.
FIG. 3 is a graph illustrating a normal operation of a pressure pump of FIG. 2 in an operable range of the pressure pump.
FIG. 4 is a graph illustrating an operation of the pressure pump of FIG. 2 when outlet pressure of the pressure pump exceeds a threshold.

### Description of Embodiments

First, the circumstances under which the configuration of the present disclosure was made will be described. In an aircraft, fuel for an engine is increased in pressure by a pump and then supplied to the engine. In a jet fuel supply system that supplies the fuel to the engine in the aircraft, the amount of fuel supplied from a pressure pump exceeds the amount of fuel required by the engine in some cases. According to the fuel supply system described in PTL 1, when the amount of fuel supplied from the pressure pump exceeds the amount of fuel required by the engine, excess fuel located downstream of the pressure pump can be returned to an upstream side of the pressure pump through a bypass line.

When the configuration of this conventional fuel supply system is directly applied to an aircraft including an engine that uses hydrogen as the fuel, the hydrogen fuel increases in temperature while flowing through the bypass line, and therefore, cannot maintain its liquid phase.

In view of the above, the present inventor considered that a system which does not include a bypass line is desirable, or a system which includes a bypass line but can reduce the amount of fuel that is returned through the bypass line to a portion of a fuel supply passage which is located upstream of a pressure pump is desirable.

When the amount of fuel supplied exceeds the amount of fuel required by the engine, controlling the amount of fuel discharged from the pressure pump that supplies the fuel is conceivable. Generally, the amount of fuel discharged from the pressure pump is controlled by the rotational speed and outlet pressure of the pressure pump. When reducing the amount of fuel discharged from the pressure pump, the rotational speed of the pressure pump is reduced, and the outlet pressure of the pressure pump is increased.

Target outlet pressure of the pressure pump is determined in accordance with an engine rotational speed, and the outlet pressure needs to be the target outlet pressure or more. However, the pressure pump has an operation limit value of the outlet pressure of the pump in accordance with the pump rotational speed. As will be described later, when reducing the rotational speed of the pressure pump in order to reduce the amount of fuel discharged from the pressure pump, the operation limit value of the outlet pressure is reduced. However, the outlet pressure cannot be reduced below the target outlet pressure. In contrast, the pressure pump needs to appropriately operate in an operation limit range, and therefore, when the opening degree of a control valve located downstream of the pump is reduced in order to reduce the amount of fuel discharged from the pressure pump, and as a result, the outlet pressure of the pressure pump increases, it is not preferable to increase the outlet pressure of the pressure pump beyond the operation limit value.

Thus, the present inventor devised a hydrogen fuel supply system that can stably operate in such a manner that when the amount of fuel supplied exceeds the amount of fuel required by the engine, a discharge flow rate of excess hydrogen fuel discharged to a discharge passage connected to the fuel supply passage is controlled in consideration of the operation limit of the pressure pump.

### Embodiment

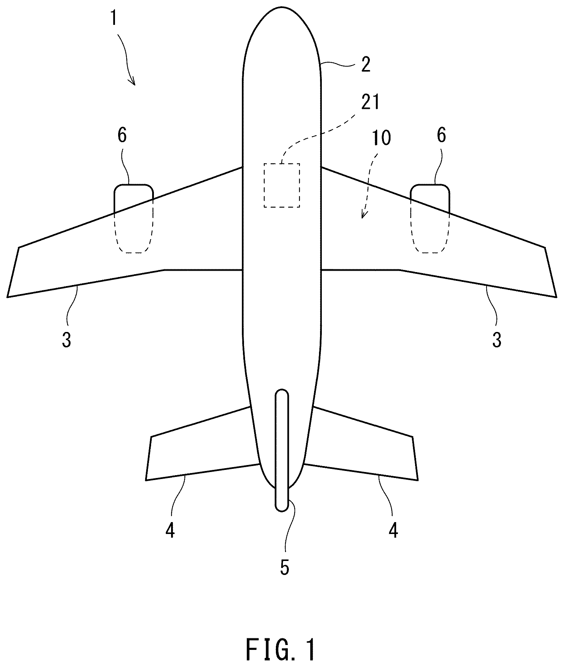

FIG. 1 is a plan view of a hydrogen aircraft 1 including a hydrogen fuel supply system 10 according to an embodiment. As shown in FIG. 1, the hydrogen aircraft 1 includes, for example, a fuselage 2, main wings 3, horizontal stabilizers 4, a vertical stabilizer 5, and gas turbine engines 6. The fuselage 2 extends in a front-rear direction of the hydrogen aircraft 1 and defines an occupant space therein. The main wings 3 project from the fuselage 2 in a left-right direction of the aircraft 1. The stabilizers 4 and 5 are located behind the main wings 3 and project from the fuselage 2. For example, the horizontal stabilizers 4 project from a rear portion of the fuselage 2 in the left-right direction of the aircraft 1. The vertical stabilizer 5 projects upward from the rear portion of the fuselage 2. The gas turbine engines 6 are mounted on a pair of main wings 3. The hydrogen fuel supply system 10 is mounted on the main wings 3 and the gas turbine engines 6.

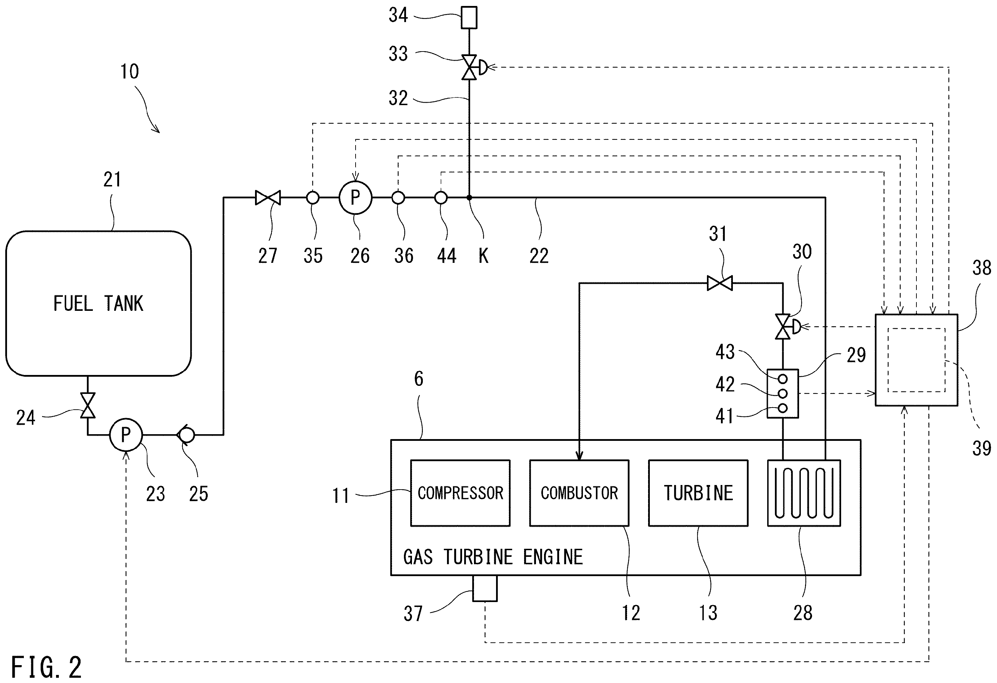

FIG. 2 is a block diagram of the hydrogen fuel supply system 10. As shown in FIG. 2, the hydrogen fuel supply system 10 includes a fuel tank 21. The fuel tank 21 stores the hydrogen fuel in a liquid phase. The fuel tank 21 is mounted on the fuselage 2, the main wings 3, or both of these. The fuel tank 21 is connected to the gas turbine engines 6 by a fuel supply passage 22. When the fuel tank 21 is located in the fuselage 2, the fuel supply passage 22 extends from the fuselage 2 through the main wings 3 to the gas turbine engines 6. Each gas turbine engine 6 includes a compressor 11, a combustor 12, and a turbine 13. The fuel supply passage 22 is connected to the combustor 12.

A feed pump 23 is located in the fuel supply passage 22. The feed pump 23 supplies the hydrogen fuel from the fuel tank 21 to the fuel supply passage 22. A shutoff valve 24 is located between the fuel tank 21 and the feed pump 23 in the fuel supply passage 22. A check valve 25 is located downstream of the feed pump 23 in the fuel supply passage 22.

A pressure pump 26 is located downstream of the check valve 25 in the fuel supply passage 22. The pressure pump 26 pressurizes the hydrogen fuel in the fuel supply passage 22. A shutoff valve 27 is located between the check valve 25 and the pressure pump 26 in the fuel supply passage 22.

A heat exchanger 28 is located downstream of the pressure pump 26 in the fuel supply passage 22. The heat exchanger 28 heats the hydrogen fuel flowing through the fuel supply passage 22. The heat exchanger 28 is thermally connected to the gas turbine engine 6. To be specific, the heat exchanger 28 heats the hydrogen fuel in the fuel supply passage 22 by utilizing the heat of the gas turbine engine 6.

A sensor 29 is located downstream of the heat exchanger 28 in the fuel supply passage 22. It is desirable that the sensor 29 be located downstream of the heat exchanger 28 and adjacent to the heat exchanger 28. In the present description, the term "adjacent" refers to a state where a fluid device, such as a valve or a pump, is not interposed between two devices. The sensor 29 includes a flow meter 41, a pressure gauge 42, and a thermometer 43. To be specific, the sensor 29 measures the flow rate, pressure, and temperature of the hydrogen fuel which has flowed through the heat exchanger 28.

A main control valve 30 is located downstream of the sensor 29 in the fuel supply passage 22. It is desirable that the main control valve 30 be located downstream of the sensor 29 and adjacent to the sensor 29. The main control valve 30 adjusts the flow rate of the hydrogen fuel which has flowed through the heat exchanger 28 and the sensor 29. To be specific, the sensor 29 is located between the main control valve 30 and the heat exchanger 28 in the fuel supply passage 22. It is desirable that the heat exchanger 28 and the sensor 29 be adjacent to each other in the fuel supply passage 22. A shutoff valve 31 is located downstream of the control valve 30 in the fuel supply passage 22. The presence and arrangement of the shutoff valves 24, 27, and 31 are optional.

A discharge passage 32 is connected to a portion of the fuel supply passage 22 which is located downstream of the pressure pump 26. For example, the discharge passage 32 is connected to a portion of the fuel supply passage 22 which is located between the pressure pump 26 and the main control valve 30. A distance between the pressure pump 26 and a connection point K where the discharge passage 32 is connected to the fuel supply passage 22 does not have to be equal to a distance between the connection point K and the main control valve 30. In the present embodiment, the discharge passage 32 is connected to a portion of the fuel supply passage 22 which is located between the pressure pump 26 and the heat exchanger 28. The discharge passage 32 is located in, for example, the main wing 3.

A sub-control valve 33 is located in the discharge passage 32. The sub-control valve 33 may be, for example, a normally closed valve. A connector 34 is located at a tip of the discharge passage 32. The connector 34 can be connected to a connector of a hydrogen collector located outside the hydrogen aircraft 1. To be specific, by the connection of the connectors, the hydrogen fuel flowing from the fuel supply passage 22 to the discharge passage 32 can be easily introduced to the hydrogen collector.

An outlet pressure sensor 36 is located downstream of the pressure pump 26 in the fuel supply passage 22. The outlet pressure sensor 36 detects outlet pressure of the pressure pump 26. An engine rotational speed sensor 37 is located at the gas turbine engine 6. The engine rotational speed sensor 37 detects the rotational speed of a rotating shaft of the gas turbine engine 6. It is sufficient that the outlet pressure sensor 36 can measure the pressure at the outlet of the pressure pump 26. The outlet pressure sensor 36 may be located in the vicinity of the outlet of the pressure pump 26 or at a position away from the outlet of the pressure pump 26.

The hydrogen fuel supply system 10 includes a controller 38. The controller 38 includes processing circuitry 39. The processing circuitry 39 includes a processor, a system memory, and a storage memory. The processor is, for example, a CPU. The system memory is, for example, a RAM. The storage memory is a hard disk, a flash memory, or a combination thereof. A configuration in which the processor executes the program stored in the storage memory by reading the program into the system memory is one example of the processing circuitry 39. The processing circuitry 39 is configured to control the feed pump 23, the pressure pump 26, the main control valve 30, and the sub-control valve 33 in accordance with detection signals of the sensors 29 and 35 to 37. Moreover, the processing circuitry 39 is configured to be able to receive various commands from a pilot of the hydrogen aircraft 1.

Specifically, the processing circuitry 39 drives the feed pump 23 upon receiving an engine start command. The processing circuitry 39 controls the pressure pump 26 so as to pressurize the hydrogen fuel in the fuel supply passage 22. The processing circuitry 39 controls the main control valve 30 such that the flow rate detected by the sensor 29 becomes a target flow rate. The processing circuitry 39 controls the sub-control valve 33 in accordance with the detection signal of the outlet pressure sensor 36.

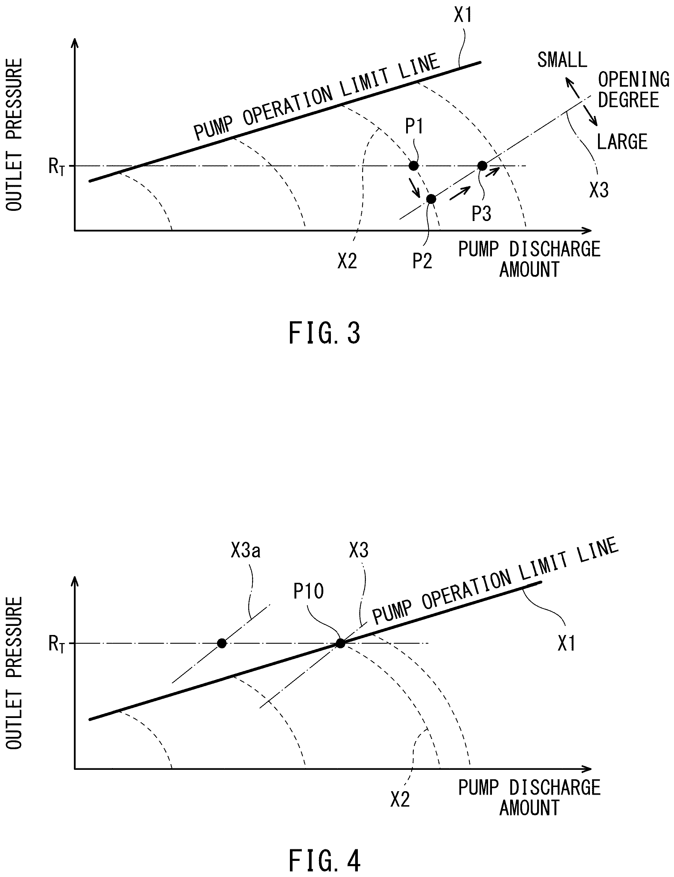

FIG. 3 is a graph illustrating a normal operation of the pressure pump 26 of FIG. 2 in an operable range. In FIG. 3, a horizontal axis represents the amount of fuel discharged from the pressure pump 26 (hereinafter simply referred to as a "pump discharge amount"), and a vertical axis represents the outlet pressure of the pressure pump 26 (hereinafter simply referred to as the "outlet pressure").

A solid line X1 in FIG. 3 is a pump operation limit line, i.e., a line indicating an operation limit value of the outlet pressure corresponding to the rotational speed of the pressure pump 26 (hereinafter simply referred to as the "operation limit value"). The outlet pressure needs to be kept lower than the pump operation limit line X1. To be specific, the outlet pressure of the pressure pump 26 needs to be lower than the operation limit value on the pump operation limit line X1. In the graph, the pump operation limit line X1 extends from the lower-left side to the upper-right side. To be specific, the operation limit value of the outlet pressure decreases as the pump discharge amount decreases. The pump discharge amount is controlled by, for example, the rotational speed of the pressure pump 26.

A dotted line X2 in FIG. 4 is a line indicating a relationship between the pump discharge amount and the outlet pressure in a state where the rotational speed of the pressure pump 26 is constant. In a state where the rotational speed of the pressure pump 26 is constant, the pump discharge amount decreases in accordance with the increase in the outlet pressure. Moreover, when the rotational speed of the pressure pump 26 decreases, the dotted line X2 shifts to the left. When the rotational speed of the pressure pump 26 increases, the dotted line X2 shifts to the right. To be specific, when the rotational speed of the pressure pump 26 decreases in a state where the outlet pressure is constant, the pump discharge amount decreases. When the rotational speed of the pressure pump 26 increases in a state where the outlet pressure is constant, the pump discharge amount increases.

A single-dotted chain line X3 in FIG. 3 is a line indicating a relationship between the pump discharge amount and the outlet pressure in a state where the opening degree of the main control valve 30 is constant. When the opening degree of the main control valve 30 decreases, the single-dotted chain line X3 shifts to the upper-left side. When the opening degree of the main control valve 30 increases, the single-dotted chain line X3 shifts to the lower-right side. To be specific, when the opening degree of the main control valve 30 decreases in a state where the rotational speed of the pressure pump 26 is constant, the outlet pressure increases. Moreover, when the opening degree of the main control valve 30 increases in a state where the rotational speed of the pressure pump 26 is constant, the outlet pressure decreases. The pump discharge amount is defined by an intersection point of the dotted line X2 indicating the relationship between the pump discharge amount and the outlet pressure in a state where the rotational speed of the pressure pump 26 is constant and the single-dotted chain line X3 indicating the relationship between the pump discharge amount and the outlet pressure in a state where the opening degree of the main control valve 30 is constant.

The processing circuitry 39 acquires the engine rotational speed detected by the engine rotational speed sensor 37 and the outlet pressure detected by the outlet pressure sensor 36. In accordance with the engine rotational speed detected by the engine rotational speed sensor 37, the processing circuitry 39 determines a target outlet pressure R_{T} that is a target value of the outlet pressure. To be specific, the target outlet pressure R_{T} changes in accordance with the engine rotational speed. Specifically, the target outlet pressure R_{T} is determined so as to increase in accordance with the increase in the engine rotational speed. The processing circuitry 39 controls the pressure pump 26 such that the acquired outlet pressure becomes the target outlet pressure R_{T} (point P1).

With reference to FIG. 3, the following will describe an operation performed when the pilot of the hydrogen aircraft 1 inputs to the processing circuitry 39 a command that increases the engine rotational speed or a command that increases the opening degree of the main control valve 30. In accordance with the command that increases the engine rotational speed or the command that increases the opening degree of the main control valve 30, the processing circuitry 39 controls the main control valve 30 so as to increase the opening degree of the main control valve 30. When the opening degree of the main control valve 30 increases, the pump discharge amount increases, and the outlet pressure decreases along the dotted line X2 (point P2). In this case, since the outlet pressure becomes lower than the target outlet pressure R_{T}, the processing circuitry 39 controls the pressure pump 26 so as to increase the rotational speed of the pressure pump 26 (point P3).

FIG. 4 is a graph illustrating an operation performed when the outlet pressure exceeds the operation limit value. With reference to FIG. 4, the following will describe one example of an operation performed when the engine rotational speed is constant, and the opening degree of the main control valve 30 is reduced (X3 changes to X3a, for example). Since the engine rotational speed is constant, the target outlet pressure R_{T} does not change. In a state at a point P10 of FIG. 4, when the pilot inputs to the processing circuitry 39 a command that reduces the amount of fuel supplied to the gas turbine engine 6, the processing circuitry 39 controls the main control valve 30 so as to reduce the opening degree of the main control valve 30 (change X3 to X3a). In this case, the outlet pressure exceeds the operation limit value on the pump operation limit line X1, and the pressure pump 26 deviates from a region in which the pressure pump 26 can operate stably.

Then, when the outlet pressure exceeds the operation limit value which is on the pump operation limit line X1 and determined in accordance with the pump rotational speed, the processing circuitry 39 controls the sub-control valve 33 so as to increase the opening degree of the sub-control valve 33 and discharges the hydrogen fuel from the fuel supply passage 22 to the discharge passage 32 such that the outlet pressure coincides with the target outlet pressure R_{T}. Thus, the target outlet pressure R_{T} and the supply of the necessary amount of fuel to the gas turbine engine 6 can be realized while securing such pump discharge amount that the outlet pressure does not exceed the operation limit value on the pump operation limit line X1. A configuration that detects that the outlet pressure detected by the outlet pressure sensor 36 has exceeded the pump operation limit line X1 is one example of an excess detector that detects the occurrence of excess hydrogen fuel in the fuel supply passage 22.

When the hydrogen fuel is discharged from the fuel supply passage 22 to the discharge passage 32, the dotted line X2 shifts to the left by the discharge amount from the perspective of the main control valve 30. When the sub-control valve 33 is in an open state, and the outlet pressure becomes higher than the target outlet pressure R_{T}, the processing circuitry 39 controls the sub-control valve 33 so as to increase the opening degree of the sub-control valve 33. Moreover, when the sub-control valve 33 is in an open state, and the outlet pressure becomes lower than the target outlet pressure R_{T}, the processing circuitry 39 controls the sub-control valve 33 so as to reduce the opening degree of the sub-control valve 33. At this time, the pump rotational speed does not have to be adjusted. On the other hand, when the target outlet pressure R_{T} changes in accordance with the change in the engine rotational speed, the pump rotational speed is controlled such that the pressure at the intersection point of the pump operation limit line X1 and a line indicating a relationship between the pump discharge amount and the outlet pressure in a state where the rotational speed of the pressure pump 26 is constant coincides with the target outlet pressure R_{T}.

As above, the processing circuitry 39 controls the opening degree of the sub-control valve 33, the rotational speed of the pressure pump 26, and the opening degree of the main control valve 30 to realize the target outlet pressure R_{T} and the amount of fuel required by the gas turbine engine 6 while securing such pump discharge amount that the outlet pressure does not exceed the operation limit value on the pump operation limit line X1. Based on the outlet pressure detected by the outlet pressure sensor 36 and the flow rate detected by the flow meter 41, the processing circuitry 39 may determine whether or not the target outlet pressure R_{T} and the amount of fuel required by the gas turbine engine 6 are satisfied.

As above, when the outlet pressure reaches the operation limit value, the sub-control valve 33 is controlled, and as a result, the hydrogen fuel is discharged from the fuel supply passage 22 to the discharge passage 32. Therefore, the pressure pump 26 is prevented from operating beyond the operation limit value. Thus, the hydrogen fuel supply system 10 of the hydrogen aircraft 1 which can operate stably can be provided.

As shown in FIG. 4, the processing circuitry 39 may perform the normal operation of the pressure pump 26 in the operable range before performing the operation performed when the outlet pressure exceeds the operation limit. To be specific, the processing circuitry 39 acquires the engine rotational speed detected by the engine rotational speed sensor 37 and the outlet pressure detected by the outlet pressure sensor 36. In accordance with the engine rotational speed detected by the engine rotational speed sensor 37, the processing circuitry 39 determines the target outlet pressure R_{T} that is the target value of the outlet pressure. The processing circuitry 39 controls the pressure pump 26 such that the acquired outlet pressure becomes the target outlet pressure R_{T}. Thus, even when excess fuel is generated in the process in which the outlet pressure is controlled to become the target outlet pressure, the excess hydrogen fuel in the fuel supply passage 22 can be discharged to the discharge passage 32 by opening and closing the sub-control valve 33.

A first flow meter and a second flow meter may be located in the fuel supply passage 22. The first flow meter may be located downstream of the connection point K between the fuel supply passage 22 and the discharge passage 32, and the second flow meter may be located upstream of the connection portion between the fuel supply passage 22 and the discharge passage 32. For example, the first flow meter is the flow meter 41 included in the sensor 29 located downstream of the heat exchanger 28, and the second flow meter is a flow meter 44 located downstream of the pressure pump 26 and upstream of the heat exchanger 28. The processing circuitry 39 can calculate the amount of excess fuel by comparing the flow rate of the hydrogen fuel measured by the first flow meter and the flow rate of the hydrogen fuel measured by the second flow meter, and control the opening degree of the sub-control valve 33 such that the excess fuel is discharged to the discharge passage 32. Therefore, the excess hydrogen fuel can be accurately discharged to the discharge passage 32. A configuration that detects that a value obtained by subtracting the flow rate of the hydrogen fuel measured by the first flow meter from the flow rate of the hydrogen fuel measured by the second flow meter has exceeded a predetermined value is one example of the excess detector that detects the occurrence of the excess hydrogen fuel in the fuel supply passage 22.

The processing circuitry 39 detects whether the hydrogen aircraft 1 is in an emergency or performing a normal operation. For example, the processing circuitry 39 acquires information regarding whether the hydrogen aircraft 1 is in the emergency or performing the normal operation, from the outside of the controller 38 or by internal processing of the processing circuitry 39. The processing circuitry 39 can select an emergency discharge mode in which the hydrogen fuel is discharged from the discharge passage 32 in the emergency or a normal discharge mode in which the excess hydrogen fuel is discharged from the discharge passage 32 during the normal operation.

The emergency discharge mode is a mode in which the processing circuitry 39 detects that the aircraft 1 is in an emergency state (for example, at the time of the failure of the aircraft, the engine, or its component), and for the purpose of, for example, preventing the occurrence and spread of fire, the hydrogen fuel is discharged to equipment located inside or outside the aircraft 1 or to the atmosphere outside the aircraft 1. Specifically, the processing circuitry 39 may detect that the aircraft 1 is in the emergency state, by detecting that an emergency button of the aircraft 1 has been pressed.

The normal discharge mode is a mode in which the processing circuitry 39 detects that the aircraft 1 is in a normal operation state (for example, during flight or during stand-by), and for the purpose of, for example, discharging the excess hydrogen fuel, the excess hydrogen fuel is discharged to equipment located inside or outside the aircraft 1 or to the atmosphere outside the aircraft 1. Specifically, the processing circuitry 39 may detect that the aircraft 1 is in the normal operation state, by detecting that the emergency state is not being detected, for example, the emergency button is not being pressed. Examples of the equipment inside or outside the aircraft 1 include auxiliary power equipment, a fuel cell, and a tank for hydrogen collection. Therefore, the hydrogen fuel can be appropriately retained or discharged in accordance with the status of the aircraft.

The foregoing has described that the processing circuitry 39 controls various equipment based on the operation limit value of the outlet pressure of the pressure pump 26. However, the processing circuitry 39 can also control various equipment based on a threshold of the outlet pressure instead of the operation limit value of the outlet pressure. The threshold of the outlet pressure is a value set such that the processing circuitry 39 performs predetermined processing when the outlet pressure reaches the threshold. The threshold of the outlet pressure may be predetermined and stored in the memory of the processing circuitry 39 or may be suitably calculated. For example, the threshold of the outlet pressure may be the operation limit value of the outlet pressure or may be a value obtained by adding a margin to the operation limit value of the outlet pressure. Even if the "operation limit value" in the above embodiment is interpreted as the "threshold," the same effects as in the above embodiment can be obtained. Moreover, by using the threshold, it is possible to perform more flexible control.

The foregoing has described that the processing circuitry 39 controls various equipment based on the outlet pressure of the pressure pump 26. However, the processing circuitry 39 can also control various equipment based on a pressure ratio of the pressure pump 26 instead of the outlet pressure of the pressure pump 26. The pressure ratio of the pressure pump 26 is a value obtained by dividing the outlet pressure of the pressure pump 26 by inlet pressure of the pressure pump 26 (pressure ratio = outlet pressure/inlet pressure). The inlet pressure of the pressure pump 26 is detected by an inlet pressure sensor 35 that is located upstream of the pressure pump 26 and detects the inlet pressure of the pressure pump 26. It is sufficient that the inlet pressure sensor 35 can measure the pressure at the inlet of the pressure pump 26. The inlet pressure sensor 35 may be located in the vicinity of the inlet of the pressure pump 26 or at a position away from the inlet of the pressure pump 26. Even if the "outlet pressure" in the above embodiment is interpreted as the "pressure ratio," the same effects as in the above embodiment can be obtained.

Increasing the opening degree of the valve may include changing a state where the opening degree of the valve is zero, i.e., closed to a state where the opening degree of the valve is an arbitrary positive value. Moreover, exceeding the operation limit value or the threshold may include reaching the operation limit value or the threshold.

The foregoing has described the embodiment as an example of the technology disclosed in the present application. However, the technology in the present disclosure is not limited to this and is applicable to embodiments in which modifications, replacements, additions, omissions, and the like have been suitably made. Moreover, a new embodiment may be prepared by combining the components described in the above embodiment. For example, some of components or methods in one embodiment may be applied to another embodiment. Some components in an embodiment may be separated from the other components in the embodiment and arbitrarily extracted. Furthermore, the components shown in the attached drawings and the detailed explanations include not only components essential to solve the problems but also components for exemplifying the above technology and not essential to solve the problems.

The functionality of the elements in the control disclosed herein may be implemented using circuitry or processing circuitry which includes general purpose processors, special purpose processors, integrated circuits, ASICs ("Application Specific Integrated Circuits"), FPGAs ("Field Programmable Gate Arrays"), conventional circuitry and/or combinations thereof which are configured or programmed to perform the disclosed functionality. Processors are considered processing circuitry or circuitry as they include transistors and other circuitry therein. In the disclosure, the circuitry, units, or means are hardware that carry out or are programmed to perform the recited functionality. The hardware may be any hardware disclosed herein or otherwise known which is programmed or configured to carry out the recited functionality. When the hardware is a processor which may be considered a type of circuitry, the circuitry, means, or units are a combination of hardware and software, the software being used to configure the hardware and/or processor.

The following aspects disclose preferred embodiments.

### First Aspect

A hydrogen fuel supply system for an aircraft including an engine,
the hydrogen fuel supply system including:
a fuel tank storing hydrogen fuel in a liquid phase;
a fuel supply passage connecting the fuel tank to the engine;
a pressure pump that is located in the fuel supply passage and pressurizes the hydrogen fuel toward the engine;
a main control valve located between the pressure pump and the engine in the fuel supply passage;
a discharge passage connected to a portion of the fuel supply passage which is located between the pressure pump and the main control valve;
a sub-control valve located in the discharge passage;
an outlet pressure sensor that detects outlet pressure of the pressure pump; and
processing circuitry configured to control the pressure pump, the main control valve, and the sub-control valve, wherein
the processing circuitry is configured to, when the outlet pressure detected by the outlet pressure sensor exceeds a predetermined threshold, control the sub-control valve so as to increase an opening degree of the sub-control valve.

According to this configuration, when the outlet pressure of the pressure pump exceeds the threshold, the opening degree of the sub-control valve increases, the amount of excess hydrogen fuel discharged from the discharge passage increases, and the outlet pressure decreases. Therefore, the pressure pump is prevented from operating beyond the threshold. Thus, the hydrogen fuel supply system for the aircraft which can operate stably can be provided.

### Second Aspect

The hydrogen fuel supply system according to the first aspect, further including an engine rotational speed sensor that detects a rotational speed of the engine, wherein
the processing circuitry is configured to
acquire the rotational speed of the engine,
determine target outlet pressure in accordance with the rotational speed of the engine, the target outlet pressure being a target value of the outlet pressure, and
control the pressure pump based on a detection signal of the outlet pressure sensor such that the outlet pressure becomes the target outlet pressure.

According to this configuration, the outlet pressure corresponding to the engine rotational speed can be obtained.

### Third Aspect

A hydrogen fuel supply system for an aircraft including an engine,
the hydrogen fuel supply system including:
a fuel tank storing hydrogen fuel in a liquid phase;
a fuel supply passage connecting the fuel tank to the engine;
a pressure pump that is located in the fuel supply passage and pressurizes the hydrogen fuel toward the engine;
a main control valve located between the pressure pump and the engine in the fuel supply passage;
a discharge passage connected to a portion of the fuel supply passage which is located between the pressure pump and the main control valve;
a sub-control valve located in the discharge passage;
an inlet pressure sensor that detects inlet pressure of the pressure pump;
an outlet pressure sensor that detects outlet pressure of the pressure pump; and
processing circuitry configured to control the pressure pump, the main control valve, and the sub-control valve, wherein
the processing circuitry is configured to
   calculate a pressure ratio based on a detection signal of the inlet pressure sensor and a detection signal of the outlet pressure sensor and
   when the pressure ratio exceeds a threshold, control the sub-control valve so as to increase an opening degree of the sub-control valve.

According to this configuration, when the pressure ratio of the pressure pump exceeds the threshold, the opening degree of the sub-control valve increases, the amount of excess hydrogen fuel discharged from the discharge passage increases, the outlet pressure decreases, and the pressure ratio decreases. Therefore, the pressure pump is prevented from operating beyond the threshold. Thus, the hydrogen fuel supply system for the aircraft which can operate stably can be provided.

### Fourth Aspect

The hydrogen fuel supply system according to the third aspect, further including an engine rotational speed sensor that detects a rotational speed of the engine, wherein
the processing circuitry is configured to
acquire the rotational speed of the engine,
determine a target pressure ratio in accordance with the rotational speed of the engine, the target pressure ratio being a target value of the pressure ratio, and
control the pressure pump based on the detection signal of the inlet pressure sensor and the detection signal of the outlet pressure sensor such that the pressure ratio becomes the target pressure ratio.

According to this configuration, the outlet pressure corresponding to the engine rotational speed can be obtained.

### Fifth Aspect

The hydrogen fuel supply system according to any one of the first to fourth aspects, further including:
a first flow meter located in the fuel supply passage and upstream of a connection portion between the fuel supply passage and the discharge passage; and
a second flow meter located in the fuel supply passage and downstream of the connection portion between the fuel supply passage and the discharge passage, wherein
the processing circuitry is configured to
   calculate the amount of excess fuel by comparing a flow rate of the hydrogen fuel measured by the first flow meter and a flow rate of the hydrogen fuel measured by the second flow meter and
   control the opening degree of the sub-control valve such that the excess fuel is discharged to the discharge passage.

According to this configuration, the excess hydrogen fuel can be accurately discharged to the discharge passage.

### Sixth Aspect

The hydrogen fuel supply system according to any one of the first to fifth aspects, wherein the processing circuitry is configured to
detect whether the aircraft is in an emergency state or in a normal operation state;
when the emergency state is detected, select an emergency discharge mode in which the hydrogen fuel is discharged from the fuel supply passage to the discharge passage, and
when the normal operation state is detected, select a normal discharge mode in which excess hydrogen fuel in the fuel supply passage is discharged to the discharge passage.

According to this configuration, the excess hydrogen fuel can be appropriately retained or discharged in accordance with the status of the aircraft.

### Seventh Aspect

The hydrogen fuel supply system according to any one of the first to sixth aspects, further including a connector located at a tip of the discharge passage.

According to this configuration, by connecting the discharge passage through the connector to the hydrogen collector located outside the aircraft, the hydrogen can be easily supplied from the discharge passage to the hydrogen collector.

### Eighth Aspect

An aircraft including:
an engine;
a fuel tank storing hydrogen fuel in a liquid phase;
a fuel supply passage connecting the fuel tank to the engine;
a pressure pump that is located in the fuel supply passage and pressurizes the hydrogen fuel toward the engine;
at least one discharge passage connected to the fuel supply passage;
an excess detector that detects the occurrence of excess hydrogen fuel in the fuel supply passage;
a valve that adjusts flow in the discharge passage; and
processing circuitry configured to control the valve, wherein
the processing circuitry includes
   an emergency discharge mode which is selected in an emergency and in which the processing circuitry controls the valve to discharge the hydrogen fuel from the fuel supply passage to the discharge passage and
   a normal discharge mode which is selected during a normal operation and in which when the occurrence of the excess hydrogen fuel in the fuel supply passage is detected, the processing circuitry controls the valve to discharge the excess hydrogen fuel in the fuel supply passage to the discharge passage.

According to this configuration, the excess hydrogen fuel can be appropriately retained or discharged in accordance with the status of the aircraft.

### Ninth Aspect

The aircraft according to the eighth aspect, wherein the discharge passage is connected to a portion of the fuel supply passage which is located between the pressure pump and the valve.

According to this configuration, the amount of hydrogen fuel flowing through the main control valve can be adjusted to an appropriate amount while maintaining the amount of hydrogen fuel required to be discharged from the pressure pump.

### Reference Signs List

- 1: hydrogen aircraft
- 6: gas turbine engine
- 10: hydrogen fuel supply system
- 21: fuel tank
- 22: fuel supply passage
- 26: pressure pump
- 30: main control valve
- 32: discharge passage
- 33: sub-control valve
- 34: connector
- 35: inlet pressure sensor
- 36: outlet pressure sensor
- 37: engine rotational speed sensor
- 39: processing circuitry
- X1: pump operation limit line

## Claims

1. A hydrogen fuel supply system for an aircraft including an engine,
the hydrogen fuel supply system comprising:
a fuel tank storing hydrogen fuel in a liquid phase;
a fuel supply passage connecting the fuel tank to the engine;
a pressure pump that is located in the fuel supply passage and pressurizes the hydrogen fuel toward the engine;
a main control valve located between the pressure pump and the engine in the fuel supply passage;
a discharge passage connected to a portion of the fuel supply passage which is located between the pressure pump and the main control valve;
a sub-control valve located in the discharge passage;
an outlet pressure sensor that detects outlet pressure of the pressure pump; and
processing circuitry configured to control the pressure pump, the main control valve, and the sub-control valve, wherein
the processing circuitry is configured to, when the outlet pressure detected by the outlet pressure sensor exceeds a predetermined threshold, control the sub-control valve so as to increase an opening degree of the sub-control valve.

2. The hydrogen fuel supply system according to claim 1, further comprising an engine rotational speed sensor that detects a rotational speed of the engine, wherein
the processing circuitry is configured to
acquire the rotational speed of the engine,
determine target outlet pressure in accordance with the rotational speed of the engine, the target outlet pressure being a target value of the outlet pressure, and
control the pressure pump based on a detection signal of the outlet pressure sensor such that the outlet pressure becomes the target outlet pressure.

3. A hydrogen fuel supply system for an aircraft including an engine,
the hydrogen fuel supply system comprising:
a fuel tank storing hydrogen fuel in a liquid phase;
a fuel supply passage connecting the fuel tank to the engine;
a pressure pump that is located in the fuel supply passage and pressurizes the hydrogen fuel toward the engine;
a main control valve located between the pressure pump and the engine in the fuel supply passage;
a discharge passage connected to a portion of the fuel supply passage which is located between the pressure pump and the main control valve;
a sub-control valve located in the discharge passage;
an inlet pressure sensor that detects inlet pressure of the pressure pump;
an outlet pressure sensor that detects outlet pressure of the pressure pump; and
processing circuitry configured to control the pressure pump, the main control valve, and the sub-control valve, wherein
the processing circuitry is configured to
calculate a pressure ratio based on a detection signal of the inlet pressure sensor and a detection signal of the outlet pressure sensor and
when the pressure ratio exceeds a predetermined threshold, control the sub-control valve so as to increase an opening degree of the sub-control valve.

4. The hydrogen fuel supply system according to claim 3, further comprising an engine rotational speed sensor that detects a rotational speed of the engine, wherein
the processing circuitry is configured to
acquire the rotational speed of the engine,
determine a target pressure ratio in accordance with the rotational speed of the engine, the target pressure ratio being a target value of the pressure ratio, and
control the pressure pump based on the detection signal of the inlet pressure sensor and the detection signal of the outlet pressure sensor such that the pressure ratio becomes the target pressure ratio.

5. The hydrogen fuel supply system according to any one of claims 1 to 4, further comprising:
a first flow meter located in the fuel supply passage and upstream of a connection portion between the fuel supply passage and the discharge passage; and
a second flow meter located in the fuel supply passage and downstream of the connection portion between the fuel supply passage and the discharge passage, wherein
the processing circuitry is configured to
calculate the amount of excess fuel by comparing a flow rate of the hydrogen fuel measured by the first flow meter and a flow rate of the hydrogen fuel measured by the second flow meter and
control the opening degree of the sub-control valve such that the excess fuel is discharged to the discharge passage.

6. The hydrogen fuel supply system according to any one of claims 1 to 5, wherein the processing circuitry is configured to
detect whether the aircraft is in an emergency state or in a normal operation state;
when the emergency state is detected, select an emergency discharge mode in which the hydrogen fuel is discharged from the fuel supply passage to the discharge passage, and
when the normal operation state is detected, select a normal discharge mode in which excess hydrogen fuel in the fuel supply passage is discharged to the discharge passage.

7. The hydrogen fuel supply system according to any one of claims 1 to 6, further comprising a connector located at a tip of the discharge passage.

8. An aircraft comprising:
an engine;
a fuel tank storing hydrogen fuel in a liquid phase;
a fuel supply passage connecting the fuel tank to the engine;
a pressure pump that is located in the fuel supply passage and pressurizes the hydrogen fuel toward the engine;
at least one discharge passage connected to the fuel supply passage;
an excess detector that detects the occurrence of excess hydrogen fuel in the fuel supply passage;
a valve that adjusts flow in the discharge passage; and
processing circuitry configured to control the valve, wherein
the processing circuitry includes
an emergency discharge mode which is selected in an emergency and in which the processing circuitry controls the valve to discharge the hydrogen fuel from the fuel supply passage to the discharge passage and
a normal discharge mode which is selected during a normal operation and in which when the occurrence of the excess hydrogen fuel in the fuel supply passage is detected, the processing circuitry controls the valve to discharge the excess hydrogen fuel in the fuel supply passage to the discharge passage.

9. The aircraft according to claim 8, wherein the discharge passage is connected to a portion of the fuel supply passage which is located between the pressure pump and the valve.
